# EUROPEAN PATENT APPLICATION

(11) **EP 4 444 022 A1**
(43) Date of publication of application: **09.10.2024**
(21) Application number: 22900677.0
(22) Date of filing: 02.12.2022
(51) Int. Cl.: H04W 76/11

(54) **INTERACTION METHOD FOR MEDIA FUNCTION AND DEVICE**

(30) Priority: 02.12.2021 CN 202111457809
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: BAI, Xueqian, Beijing 100053 (CN); JIANG, Yi, Beijing 100053 (CN)
(74) Representative: Maiwald GmbH
(86) International application number: PCT/CN2022/136195
(87) International publication number: WO 2023/098873

(57) **Abstract**

The present application discloses an interaction method for a media function and a device. The method comprises: a first network element sends, to a second network element, a media function discovery request message used for querying a target media function; the first network element receives a media function discovery request response message sent by the second network element, wherein the media function discovery request response message is used for feeding back information of at least one candidate media function instance matching the target media function. According to the interaction method for a media function and the device provided in the embodiments of the present application, by means of media function aggregation and SBI-based interaction, an information interaction process between media functions can be greatly simplified, the information interaction efficiency can be improved, and intercommunication between network elements from different manufacturers can be facilitated.

## Description

### CROSS-REFERENCE TO RELATED APPLICATIONS

This application is based on and claims priority to Chinese Patent Application No. 202111457809.3, filed on December 2, 2021, the entire contents of which are incorporated herein by reference.

### TECHNICAL FIELD

The disclosure relates to a field of mobile communication technologies, and specifically to a method and a device for interaction of a media function.

### BACKGROUND

At present, media related functions in an Internet protocol (IP) multimedia subsystem (IMS) network are achieved by deploying into a plurality of different media network elements:
a transition gateway (TrGW), configured to achieve a media transition function of intercommunicating with other IP networks of an operator;
an IP multimedia gateway (IM-MGW), configured to achieve media function intercommunicating between the IMS network and other non-IP networks. The other non-IP networks includes a traditional 3G network and a public switched telephone network (PSTN);
an IMS access gateway (IMS-AGW), having a network address translation (NAT) capability, configured to achieve translation of signaling and media at different IP types (IPv 4, IPv 6) of addresses; and
a media resource function controller (MRFP), configured to process media service resources, that is, media service resources sent by an application server (AS) are processed by the MRFP for a user, such as playback, receiving numbers, holding conferences or recording.

There are at least following problems in the IMS network in the related art:
1) An existing IMS network interface adopts an H.248 protocol, with poor expansibility, it is difficult to decouple and deploy media control network elements and media bearing network elements for different manufacturers.
2) The existing IMS technology deploys different media functions on different media network elements, which brings inconvenience to control of the media and complicates interconnecting and intercommunicating between different media network elements.

### SUMMARY

A method and a device for interaction of a media function is provided in at least one embodiment of the disclosure, to solve the problem that it is difficult to associate a user identification (ID) at a service side with a user ID at a network side in the related art.

To solve the above technical problem, the disclosure is implemented in following ways.

In a first aspect, a method for interaction of a media function in an Internet protocol (IP) multimedia subsystem (IMS) network is provided according to embodiments of the disclosure, and includes:
sending, by a media control server (MCS), a media function discovery request message to a second network element, in which the media function discovery request message is configured to query a target media function;
receiving, by the MCS, a media function discovery request response message from the second network element, in which the media function discovery request response message is configured to feed back information of at least one candidate media function instance matching the target media function; and
selecting, by the MCS, a target media function instance from the at least one candidate media function instance, to provide the target media function.

In an embodiment, the media function discovery request message carries at least one of:
a name of the target media function;
a type of the target media function;
a type of a requester triggering a media function discovery request; or
target media capability information, in which the target media capability information includes at least one of a codec capability, a playback capability, a conference capability, a data channel media capability or a topology hiding capability.

In an embodiment, the media function discovery request response message carries at least one of:
a type of the candidate media function instance;
an identification of the candidate media function instance;
an address of the candidate media function instance, in which the address includes a fully qualified domain name (FQDN) address and/or an IP address;
media service capability information that the candidate media function instance is capable of providing;
a matching priority of the candidate media function instance;
load information of the candidate media function instance; or
position information of the candidate media function instance.

In an embodiment, the method further includes:
selecting by the MCS, the target media function instance from the at least one candidate media function instance includes:
selecting, by the MCS, the target media function instance from the at least one candidate media function instance, according to information carried in the media function discovery request response message and a preconfigured media function selection mechanism.

In an embodiment, selecting the target media function instance from the at least one candidate media function instance includes at least one of:
when the at least one candidate media function instance includes only one media function instance, selecting the one candidate media function instance as the target media function instance; or
when the at least one candidate media function instance includes at least two media function instances, selecting one target media function instance according to the preconfigured media function selection mechanism.

In an embodiment, selecting the one target media function instance according to the preconfigured media function selection mechanism includes:
when the preconfigured media function selection mechanism is a random mechanism, selecting one target media function instance from the at least two media function instances based on a random algorithm;
when the preconfigured media function selection mechanism is a priority mechanism, selecting one target media function instance from the at least two media function instances in a matching priority order; and
when the preconfigured media function selection mechanism is a localized mechanism, selecting one target media function instance from the at least two media function instances according to a selection mechanism of the MCS.

In an embodiment, the selection mechanism of the MCS includes at least one of:
selecting according to position information of a user equipment (UE) and position information of the at least two media function instances;
selecting according to a codec capability of a UE and codec capabilities of the at least two media function instances; or
selecting according to load information of the at least two media function instances.

In an embodiment, the MCS sends the media function discovery request message to the second network element, in response to receiving a request related to a media session from a requester.

In an embodiment, the request related to the media session includes at least one of:
a call request that requires to establish an IMS session;
a playback request;
a conference request;
a codec negotiation request;
establishing different network sessions of a session initialization protocol (SIP); or
a data channel session request.

In an embodiment, the method further includes:
sending, by the MCS, a subscription request message to the second network element, in which the subscription request message is configured to subscribe state information of a first media function instance, and carries a receiving address of the state information of the first media function instance; and
receiving, by the MCS, a subscription request response message from the second network element, in which the subscription request response message indicates whether the state information of the first media function instance is successfully subscribed.

In an embodiment, the subscription request message further carries indication information of a media capability desired for subscription.

In an embodiment, the method further includes:
receiving, by the MCS, a media state update message from the second network element, in which the media state update message carries state update information of the first media function instance.

In an embodiment, the method further includes:
sending, by the MCS, a media session establishment request to a target third network element, in which the media session establishment request is configured to negotiate a target media resource for media session establishment between the corresponding media control server and a third network element, and the target third network element is a third network element where the target media function instance is located;
receiving, by the MCS, a media session establishment request response message returned from the target third network element, in which the media session establishment request response message carries related information of the target media resource; and
sending, by the MCS, the related information of the target media resource to a requester triggering the media function discovery request message.

In an embodiment, the method further includes:
sending, by the MCS, a media session update request to the target third network element, in which the media session update request carries update indication information of the target media resource; and
receiving, by the MCS, a media session update request response message returned from the target third network element.

In an embodiment, the method further includes:
sending, by the MCS, a media session removal request to the target third network element, in which the media session removal request includes a session removal indication and media resource information requested for removal; and
receiving, by the MCS, a media session removal request response message returned from the target third network element.

In an embodiment, the MCS communicates with the second network element and a media function instance using a service based interface (SBI).

In a second aspect, a method for interaction of a media function in an IMS network is provided according to embodiments of the disclosure, and includes:
receiving, by a second network element, a media function discovery request message from a MCS, in which the media function discovery request message is configured to query a target media function;
determining, by the second network element, at least one candidate media function instance matching the target media function, and sending a media function discovery request response message to the MCS, in which the media function discovery request response message is configured to feed back information of the at least one candidate media function instance.

In an embodiment, the media function discovery request message carries at least one of:
a name of the target media function;
a type of the target media function;
a type of a requester triggering a media function discovery request; or
target media capability information, in which the target media capability information includes at least one of a codec capability, a playback capability, a conference capability, a data channel media capability or a topology hiding capability.

In an embodiment, the media function discovery request response message carries at least one of:
a type of the candidate media function instance;
an identification of the candidate media function instance;
an address of the candidate media function instance, in which the address includes a FQDN address and/or an IP address;
media service capability information that the candidate media function instance is capable of providing;
a matching priority of the candidate media function instance;
load information of the candidate media function instance; or
position information of the candidate media function instance.

In an embodiment, the method further includes:
receiving, by the second network element, media capability registration request information from a third network element, in which the media capability registration request information is configured to register a media capability of a media function instance of the third network element; and
storing, by the second network element, a corresponding relationship between the media function instance and the media capability according to the media function registration request information, and sending media function registration request response information to the third network element.

In an embodiment, the media capability registration request information carries at least one of: a type of a media function, an identification of the media function instance, an address of the media function instance, or media service capability information that the media function instance is capable of providing.

In an embodiment, the method further includes:
receiving, by the second network element, a subscription request message from the MCS, in which the subscription request message is configured to subscribe state information of a first media function instance, and carries a receiving address of the state information of the first media function instance; and
sending, by the second network element, a subscription request response message to the MCS, in which the subscription request response message indicates whether the state information of the first media function instance is successfully subscribed.

In an embodiment, the method further includes:
in response to a state of the first media function instance being updated, sending, by the second network element, a media stater subscription message to the MCS, in which the media state subscription message carries state update information of the first media function instance.

In an embodiment, the second network element communicates with the MCS and a media function instance using a SBI.

In a third aspect, a method for interaction of a media function in an IMS network is provided according to embodiments of the disclosure, and includes:
receiving, by a third network element, a media session establishment request from a MCS, in which the media session establishment request is configured to negotiate a target media resource for media session establishment between the MCS and the third network element; and
sending, by a media function instance, a media session establishment request response message to the MCS, in response to the media session establishment request, in which the media session establishment request response message carries related information of the target media resource.

In an embodiment, the method further includes:
receiving, by the third network element, a media session update request from the MCS, in which the media session update request carries update indication information of the target media resource; and
updating, by a media control service, the target media resource according to the update indication information, and sending a media session update request response message to the MCS after completing update.

In an embodiment, the method further includes:
receiving, by the third network element, a media session removal request from the MCS, in which the media session removal request includes a session removal indication and media resource information requested for removal; and
removing, by a media control service, a corresponding media session according to the media session removal request, releasing a corresponding media resource, and sending a media session removal request response message to the MCS.

In an embodiment, the method further includes:
sending, by the third network element, media capability registration request information to a second network element, in which the media capability registration request information is configured to register a media capability of a media function instance of the third network element; and
receiving, by the third network element, media function registration request response information from the second network element.

In an embodiment, a plurality of media function instances are centralized in the third network element, and the plurality of media function instances include at least one of:
a data channel media function instance;
a TrGW function instance;
an IM-MGW function instance;
an IMS-AGW function instance; or
a media resource processing function instance.

In an embodiment, the third network element communicates with the MCS and a second network element instance using a SBI.

In a fourth aspect, a MCS including a processor and a transceiver is provided according to embodiments of the disclosure.

The transceiver is configured to send a media function discovery request message to a second network element, in which the media function discovery request message is configured to query a target media function, and receive a media function discovery request response message from the second network element, in which the media function discovery request response message is configured to feed back information of at least one candidate media function instance matching the target media function; and
the processor is configured to select a target media function instance from the at least one candidate media function instance, to provide the target media function.

In a fifth aspect, a MCS is provided according to embodiments of the present disclosure. The MCS includes a processor, a memory and a program stored on the memory and executable by the processor, in which when the program is executed by the processor, steps of the method as described in the first aspect are implemented.

In a sixth aspect, a second network element including a processor and a transceiver is provided according to embodiments of the disclosure.

The transceiver is configured to receive a media function discovery request message from a MCS, in which the media function discovery request message is configured to query a target media function; and
the processor is configured to determine at least one candidate media function instance matching the target media function, and send a media function discovery request response message to the MCS, in which the media function discovery request response message is configured to feed back information of the at least one candidate media function instance.

In a seventh aspect, a second network element is provided according to embodiments of the present disclosure. The second network element includes a processor, a memory and a program stored on the memory and executable by the processor, in which when the program is executed by the processor, steps of the method as described in the second aspect are implemented.

In an eighth aspect, a third network element including a processor and a transceiver is provided according to embodiments of the disclosure.

The transceiver is configured to receive a media session establishment request from a MCS, in which the media session establishment request is configured to negotiate a target media resource for media session establishment between the MCS and the third network element; and
the processor is configured to send a media session establishment request response message to the MCS, in response to the media session establishment request, in which the media session establishment request response message carries related information of the target media resource.

In a ninth aspect, a third network element is provided according to embodiments of the present disclosure. The third network element includes a processor, a memory and a program stored on the memory and executable by the processor, in which when the program is executed by the processor, steps of the method as described in the third aspect are implemented.

In a tenth aspect, a computer-readable storage medium storing a computer program is provided according to embodiments of the present disclosure. When the computer program is executed by a processor, steps of the method as described above are implemented.

Compared with the related art, the method and the device for interaction of the media function according to embodiments of the disclosure, may solve the problem that it is difficult to associate a user ID at a service side with a user ID at a network side in the related art. In embodiments of the present disclosure, an information interaction process between media functions may be greatly simplified based on media function centralization and SBI-based interaction, which enhances the efficiency of information interaction, and facilitates intercommunication between network elements for different manufacturers.

### BRIEF DESCRIPTION OF THE DRAWINGS

FIG. 1 illustrates a simplified structural diagram of an SBI-based centralized media function (CMF) and a related interface according to embodiments of the disclosure.
FIG. 2 illustrates another structural diagram of an SBI-based CMF and a related interface according to embodiments of the disclosure.
FIG. 3 is a flowchart illustrating a method for interaction of a media function according to embodiments of the present disclosure.
FIG. 4 is another flowchart illustrating a method for interaction of a media function according to embodiments of the present disclosure.
FIG. 5 is a flowchart illustrating establishing a media session according to embodiments of the present disclosure.
FIG. 6 is a flowchart illustrating updating a media session according to embodiments of the present disclosure.
FIG. 7 is a flowchart illustrating removing a media session according to embodiments of the present disclosure.
FIG. 8 is a flowchart illustrating subscribing a media function according to embodiments of the present disclosure.
FIG. 9 is another flowchart illustrating a method for interaction of a media function according to embodiments of the present disclosure.
FIG. 10 is a flowchart illustrating a method for registering a media function according to embodiments of the present disclosure.
FIG. 11 is another flowchart illustrating a method for interaction of a media function according to embodiments of the present disclosure.
FIG. 12 is a structural diagram illustrating a first network element according to an embodiment of the present disclosure.
FIG. 13 is a structural diagram illustrating a first network element according to another embodiment of the present disclosure.
FIG. 14 is a structural diagram illustrating a second network element according to an embodiment of the present disclosure.
FIG. 15 is a structural diagram illustrating a second network element according to another embodiment of the present disclosure.
FIG. 16 is a structural diagram illustrating a third network element according to an embodiment of the present disclosure.
FIG. 17 is a structural diagram illustrating a third network element according to another embodiment of the present disclosure.
FIG. 18 is a structural diagram illustrating a first network element according to another embodiment of the present disclosure.
FIG. 19 is a structural diagram illustrating a second network element according to another embodiment of the present disclosure.
FIG. 20 is a structural diagram illustrating a third network element according to another embodiment of the present disclosure.

### DETAILED DESCRIPTION

Example embodiments of the present disclosure will be described in details with reference to accompanying drawings. Although exemplary embodiments of the present disclosure are shown in the drawings, it should be understood that the present disclosure may be implemented in various forms and should not be limited by the embodiments set forth herein. Rather, the embodiments are provided for a thorough understanding of the present disclosure and may fully convey the scope of the present disclosure to those skilled in the art.

The "first", "second" or similar words used in the description and the claims are configured only to distinguish similar objects, rather than describe a specific order or a precedence order. It should be understood that the term used herein may be interchanged where appropriate so that the embodiments of the present disclosure described herein may be implemented in an order other than illustrated or described herein. In addition, terms "comprise/include" and "have" and their any variations are intended to cover non-exclusive inclusions. For example, a process, method, system, product, or device, containing a series of steps or units is not limited to the listed steps or units, but may further include steps or units not listed inherent to such process, method, product or device. "and/or" in the description and the claims represents at least one of connected objects.

The technology is not limited to a new radio (NR) system and a long time evolution (LTE)/LTE-Advanced (LTE-A) system, and is applicable to various wireless communication systems, such as code division multiple access (CDMA), time division multiple access (TDMA), frequency division multiple access (FDMA), orthogonal frequency division multiple access (OFDMA), single-carrier frequency-division multiple access (SC-FDMA) and other systems. The terms "system" and "network" are often used interchangeably. The CDMA system may implement radio technologies such as CDMA2000 and universal terrestrial radio access (UTRA). The UTRA includes a wideband CDMA (WCDMA) and other CDMA variants. The TDMA system may implement radio technologies such as a global system for mobile communications (GSM). The OFDMA system may implement radio technologies such as ultra mobile broadband (UMB), evolved UTRA (E-UTRA), IEEE 802.21 (Wi-Fi), IEEE802.16 (WiMAX), IEEE 802.20 and flash-OFDM. The UTRA and the E-UTRA are part of a universal mobile telecommunications system (UMTS). The LTE and a more-advanced LTE (such as LTE-A) are new UMTS releases that use the E-UTRA. The UTRA, E-UTRA, UMTS, LTE, LTE-A and GSM are described in the literature from an organization named "3rd generation partnership project" (3GPP). The CDMA2000 and the UMB are described in the literature from an organization named "3GPP2 generation partnership project 2" (3GPP2). The technology may be used for the above systems and radio technologies as well as for other systems and radio technologies. However, the following description describes an NR system for the purpose of examples, and NR terms are used in most of descriptions below, although the technologies are applicable to applications other than the NR system.

The following description provides examples and does not limit the scope, applicability, or configuration set forth in the claims. Changes may be made to functions and arrangements of elements discussed without departing from the spirit and scope of the present disclosure. Various examples may be properly omitted, replaced, or added with various procedures or components. For example, the described methods may be executed in a different order than described, and various steps may be added, omitted, or combined. In addition, features described with reference to certain examples may be combined in other examples.

As described in the background art, in the IMS network in the related art, there are problems that intercommunicating between media control network elements and media bearer network elements for different manufacturers is difficult, and control implementation of media functions is inconvenient. In order to solve at least one of the above problems, a method for interaction of a media function of the IMS network is provided, to implement a unified calling and interaction mechanism of a media network element in the IMS network, and solve disadvantages due to performing a media interaction and calling using the H.248 protocol in the related art.

An SBI-based media function module, a network architecture and a media function discovery and selection mechanism are provided in embodiments of the disclosure. The SBI refers to a service based interface. Specifically,
1) an SIB mechanism is introduced in a media resource interaction mechanism, to implement discovery and selection of the IMS network for a media function. The implementation mechanism may decouple the media control modules and the media function modules for different manufacturers, and deployment of related function modules becomes more flexible.
2) The SBI-based media function module is further defined in embodiments of the disclosure, which may be referred to a centralized media function (CMF) or a unified media function (UMF). The media function module may include all or part of IMS network media functions, including but not limited to media functions of TrGW, IM-MGW, IMS-AGW, MRFP, or a data channel media function. The media functions may be discovered and selected by a corresponding media control server via the SIB.
3) calling a network architecture by a SBI-based media function is further defined in embodiments of the disclosure.

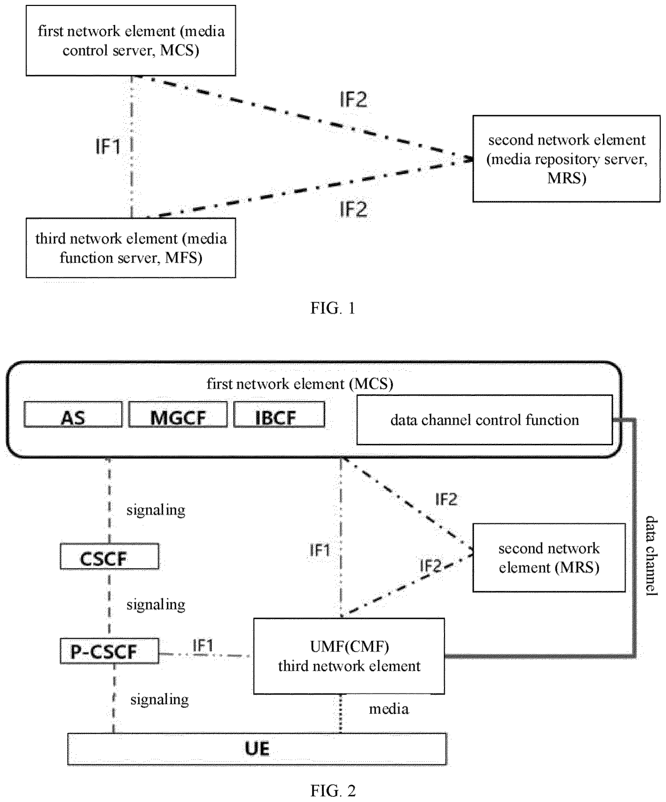

FIG. 1 illustrates a simplified structural diagram of an SBI-based CMF and a related interface in embodiments of the disclosure. The CMF in FIG. 1 may be referred to as a CMF module, a UMF or UMF module, etc.

The first network element is a server in charge of controlling a media resource in an IMS network.

In an embodiment, the first network element may be one of:
a media control server (MCS);
a data channel control function (DCCF);
a data channel server (DCS);
a data channel server-controller (DCS-C);
a data channel signaling function (DCSF);
a unified control function (UCF);
a centralized control function (CCF);
an application server (AS);
a media gateway control function (MGCF);
an inter-connect boarder control function (IBCF);
a network repository server (NRS);
a media repository function (MRF);
a media resource control function (MRCF);
an IMS network element; or
an IMS network function.

The second network element is in charge of managing and discovering a media function.

In an embodiment, the second network element may be one of:
a network repository function (NRF);
a media repository server (MRS);
a network repository server (NRS); or
a media repository function (MRF).

The third network element may include all or part of IMS network media functions, including but not limited to media functions of TrGW, IM-MGW, IMS-AGW, MRFP, or a data channel media function. The media functions may be discovered and selected by a corresponding first network element (such as a MCS) via the SIB.

In an embodiment, the third network element may be one of:
a media function server (MFS);
a unified media function (UMF);
a centralized media function (CMF);
a data channel media functionality (DCMF);
a data channel media (DCM);
a DC network function instance;
a DC media network function instance;
a DC media service;
a data channel server-media (DCS-M);
a media resource function (MRF);
a media resource function processor (MRFP);
IMS-AGW;
IM-MGW;
TrGW; or
other IMS media functions or other 5th generation mobile communication technology core (5GC) media functions.

The other IMS media functions or other 5GC media functions refer to IMS media functions or 5GC media functions different from the IMS-AGW, the MRFP, the IM-MGw, the TrGW and a user plane function (UPF).

FIG. 2 provides a more detailed structural diagram of an SBI-based CMF module and an interface.

The UMF (CMF) represents a CMF module or a UMF module. The function module may uniformly include all or part of IMS network media functions, including but not limited to media functions of TrGW, IM-MGW, IMS-AGW, MRFP, or a data channel media function. The media functions may be called by a corresponding MCS via the SIB. The MCS in FIG. 2 includes an AS, an MGCF, an IBCF, a data channel server, etc. The MRS is mainly responsible for storage, calling, registration, discovery, subscription, etc. of media functions and capabilities.

In FIG. 2, an interface between each MCS and the UMF (CMF) module is referred to as an IF1, and an interface between each MCS and the MRS is referred to as an IF2.

In FIG. 2, an AS, an MGCF, an IBCF, a P-CSCF and a DCS or a data channel control function are further included.

The AS represents an application server in an IMS network, and is in charge of functions such as a server centralization and continuity application server (SCC-AS) and a multimedia telephony (MMTEL).

The MGCF is a control module in charge of controlling the IM-MGW, and is in charge of interactions between the IMS and the Client-Server (CS) network.

The IBCF is in charge of controlling the TrGW and completing a boundary intercommunication function between IMS networks of different operators or between the IMS network and other networks (such as the CS network).

The P-CSCF represents a proxy-call session control function, and is in charge of controlling the IMS-AGW for media resource control and codec negotiation.

The DCS or the data channel control function is a server in charge of controlling data channel establishment and media resource negotiation.

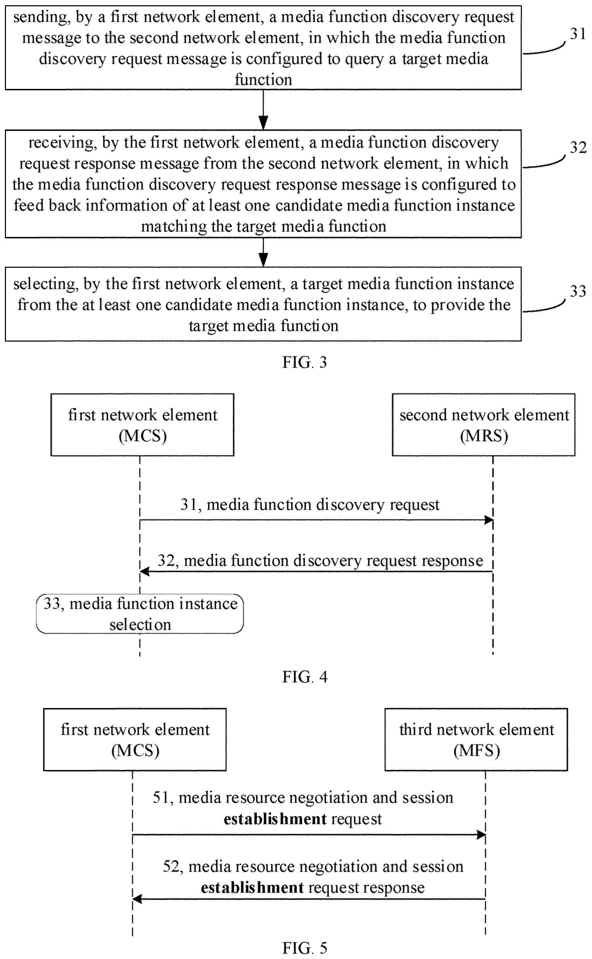

Sometimes, the MCS, the MRS and the MFS are implementations of the first network element, the second network element and the third network element. It should be noted that the above servers are only one implementation corresponding to the network element, which are not limited in embodiments of the present disclosure. For example, in the following, FIGS. 4 to 8 and 10, the MCS, the MRS and the MFS may be replaced by the first network element, the second network element and the third network element, respectively.

Referring to FIGS. 3 to 4, when the method for interaction of the media function provided in embodiments of the disclosure is applied to a MCS side, FIG. 4 is illustrated by taking the first network element being the MCS and the second network element being the MRS for example. The server in FIG. 4 may be replaced by a corresponding network element. As illustrated in FIG. 3, the method includes the following steps.

At step 31, the first network element sends a media function discovery request message to the second network element. The media function discovery request message is configured to query a target media function.

After the MCS receives a first request related to a media session from a requester, the MCS may determine a target media function corresponding to the first request, and send the media function discovery request message at step 31 to the MRS. That is, the MCS is triggered by a certain requester to send the above media function discovery request message, and trigger a subsequent media resource negotiation.

The request related to the media session includes at least one of: 1) a calling request that requires to establish an IMS session; 2) a playback request; 3) a conference request; 5) a codec negotiation request; 6) establishing different network sessions of a session initialization protocol (SIP); or 7) a data channel session request. Of course, embodiments of the disclosure may be other requests related to the media session, which will not be illustrated.

For example, when a certain requester needs a service of a certain media session, the first request is sent to the MCS. The first request indicates a service of a media session that the requester desires to obtain, to trigger the MCS to initiate the above media function discovery request. The MCS sends the above media function discovery request message to the MRS after receiving the first request from the requester, to query a media function instance capable of providing the target media function.

Specifically, the media function discovery request message may carry at least one of:
1) a name of the target media function;
2) a type of the target media function; or
3) a type of a requester triggering a media function discovery request.

In an embodiment, the media function discovery request message may also carry target media capability information. The target media capability information includes at least one of a codec capability, a playback capability, a conference capability, a data channel media capability or a topology hiding capability.

At step 32, the first network element receives a media function discovery request response message from the second network element. The media function discovery request response message is configured to feed back information of at least one candidate media function instance matching the target media function.

The media function discovery request response message may carry at least one of:
1) a type of the candidate media function instance; the type of the candidate media function instance usually matches the type of the target media function;
2) an ID of the candidate media function instance;
3) an address of the candidate media function instance, in which the address includes a fully qualified domain name (FQDN) address and/or an IP address;
4) media service capability information that the candidate media function instance is capable of providing.

In an embodiment, the media function discovery request response message also carries at least one of a matching priority of the candidate media function instance; load information of the candidate media function instance; or position information of the candidate media function instance.

At step 33, the first network element selects a target media function instance from the at least one candidate media function instance, to provide the target media function.

Based on the above steps, discovery of the media function is implemented in embodiments of the disclosure, and a corresponding media resource may be provided for the requester.

It needs to be noted that the MCS communicates with the MRS using the SBI in embodiments of the disclosure. That is, at the above steps, the MCS sends to the MRS a media function discovery request message via the SBI, in which the media function discovery request message is configured to query a target media function; and the MCS receives the media function discovery request response message from the MRS via the SBI. The SBI-based media function discovery and selection mechanism is adopted in embodiments of the disclosure. Compared with an interaction and negotiation mode of media capabilities and resources based on an H.248/Megaco protocol in the related art, the embodiments of the disclosure may solve the problem in the related art that the protocol expansibility is poor due to the H.248 protocol used by the IMS network interface and it is difficult to decouple and deploy network elements for different manufacturers.

At step 33, the MCS may select the target media function instance from the at least one candidate media function instance, according to information carried in the media function discovery request response message and a preconfigured media function selection mechanism.

Specifically, an implementation of selecting the target media function instance from the at least one candidate media function instance includes at least one of:
1) when the at least one candidate media function instance includes only one media function instance, selecting the one candidate media function instance as the target media function instance; or
2) when the at least one candidate media function instance includes at least two media function instances, selecting one target media function instance according to the preconfigured media function selection mechanism. For example,
   2a) when the preconfigured media function selection mechanism is a random mechanism, one target media function instance is selected from the at least two media function instances based on a random algorithm;
   2b) when the preconfigured media function selection mechanism is a priority mechanism, one target media function instance is selected from the at least two media function instances in a matching priority order; and
   2c) when the preconfigured media function selection mechanism is a localized mechanism, one target media function instance is selected from the at least two media function instances according to a selection mechanism of the MCS. The selection mechanism of the MCS may include but not limited to: i) selecting according to position information of a user equipment (UE) and position information of the at least two media function instances; ii) selecting according to a codec capability of a UE and codec capabilities of the at least two media function instances; or iii) selecting according to load information of the at least two media function instances.

After step 32, a media session establishment mechanism is further provided in embodiments of the disclosure. Specifically, as illustrated in FIG. 5, the method further includes the following steps.

At step 51, the MCS sends a media session establishment request to a target MFS. The media session establishment request is configured to negotiate a target media resource for media session establishment between the MCS and the MFS. The target MFS is a MFS where the target media function instance is located.

At step 52, the MCS receives a media session establishment request response message returned from the target MFS. The media session establishment request response message carries related information of the target media resource.

Subsequently, the MCS may send the related information of the target media resource to a requester triggering the media function discovery request message, thereby achieving establishment of the media session. The requester is a requester sending a first request related to the media session.

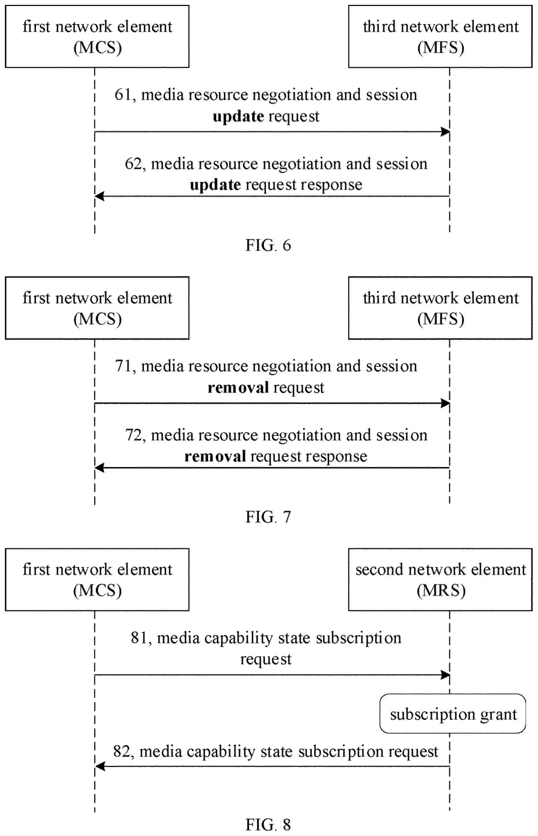

In embodiments of the present disclosure, the target media resource needs to be updated. In this case, as illustrated in FIG. 6, the method further includes the following steps.

At step 61, the MCS sends a media session update request to the target MFS. The media session update request carries update indication information of the target media resource, to indicate how the MFS updates the media resource.

At step 62, the MCS receives a media session update request response message returned from the target MFS.

The MFS updates the target media resource according to the update indication information after receiving the media session update request at step 61, and sends a media session update request response message to the MCS after completing update, to indicate a specific update result, for example, information such as update is successful or failed.

As illustrated in FIG. 7, when the requester does not need the media session, the method further includes the following steps.

At step 71, the MCS sends a media session removal request to the target media function server. The media session removal request includes a session removal indication and media resource information requested for removal.

At step 72, the MCS receives a media session removal request response message returned from the target MFS.

The MFS removes a corresponding media session according to the media session removal request, releases a corresponding media resource, and sends a media session removal request response message to the MCS.

In embodiments of the present disclosure, the MCS may acquire state information of the media function instance in time based on a subscription mechanism. As illustrated in FIG. 8, the method further includes the following steps.

At step 81, the MCS sends a subscription request message to an MRS. The subscription request message is configured to subscribe state information of a first media function instance, and carries a receiving address of the state information of the first media function instance.

The subscription request message may further carry indication information of a media capability desired for subscription.

At step 82, the MCS receives a subscription request response message from the MRS. The subscription request response message indicates whether the state information of the first media function instance is successfully subscribed.

The MRS determines whether the subscription is allowed when receiving the subscription request message. When the subscription is allowed, the subscription is granted, and a related subscription relationship is established and maintained.

As such, after the state information of the first media function instance is successfully subscribed, the MCS may subsequently receive a media state update message from the MRS. The media state update message carries state update information of the first media function instance.

In embodiments of the present disclosure, the related request and the response message involved in FIGS. 4 to 8 may be interacted via the SBI.

In addition, in order to facilitate management of each media function, in embodiments of the present disclosure, a plurality of media function instances are centralized in the same MFS (for example, a CMF server or a UMF server). The plurality of media function instances include at least one of: a data channel media function instance; a TrGW function instance; an IM-MGW function instance; an IMS-AGW function instance; or a media resource processing function instance (for example, playback, conference media processing).

In embodiments of the disclosure, an information interaction process between media functions may be greatly simplified based on the above centralization and the SBI-based interaction, which enhances the efficiency of information interaction, and facilitates intercommunication between network elements for different manufacturers.

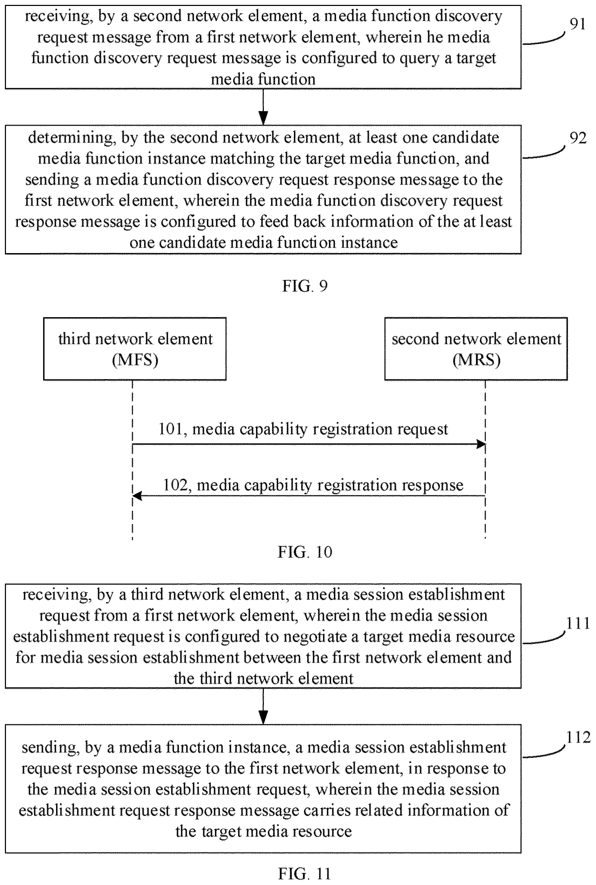

Referring to FIG. 9 and in combination with FIG. 4, when the method for interaction of the media function of the IMS network in embodiments of the disclosure is performed by the MRS, the method includes the following steps.

At step 91, a second network element receives a media function discovery request message from a first network element. The media function discovery request message is configured to query a target media function.

The media function discovery request message may carry at least one of:
1) a name of the target media function;
2) a type of the target media function; or
3) a type of a requester triggering a media function discovery request.

In an embodiment, the media function discovery request message may also carry target media capability information. The target media capability information includes at least one of a codec capability, a playback capability, a conference capability, a data channel media capability or a topology hiding capability.

At step 92, the second network element determines at least one candidate media function instance matching the target media function, and sends a media function discovery request response message to the first network element. The media function discovery request response message is configured to feed back information of the at least one candidate media function instance.

Specifically, the media function discovery request response message may carry at least one of:
1) a type of the candidate media function instance; the type of the candidate media function instance usually matches the type of the target media function;
2) an identification of the candidate media function instance;
3) an address of the candidate media function instance, in which the address includes a FQDN address and/or an IP address;
4) media service capability information that the candidate media function instance is capable of providing.

In an embodiment, the media function discovery request response message also carries at least one of a matching priority of the candidate media function instance; load information of the candidate media function instance; or position information of the candidate media function instance.

Based on the above steps, discovery of the media function is implemented in embodiments of the disclosure, and a corresponding media resource may be provided for the requester.

Referring to FIG. 10, before step 91 in embodiments of the disclosure, the method further includes the following steps.

At step 101, the MRS receives media capability registration request information from the MFS. The media capability registration request information is configured to register a media capability of a media function instance of the MFS.

The media capability registration request information specifically may carry at least one of: a type of a media function, an ID of the media function instance, an address of the media function instance, or media service capability information that the media function instance is capable of providing. The media function may include one or more media capabilities, that is, implement a related media function by one or more media capabilities.

At step 102, the MRS stores a corresponding relationship between the media function instance and the media capability according to the media function registration request information, and sends media function registration request response information to the MFS.

As illustrated in FIG. 8, in the method in embodiments of the disclosure, the MRS may receive a subscription request message from the MCS. The subscription request message is configured to subscribe state information of a first media function instance, and carries a receiving address of the state information of the first media function instance. Then, the MRS determines whether the subscription is allowed. When the subscription is allowed, the subscription is granted, and a related subscription relationship is established and maintained. Then, the MRS sends a subscription request response message to the MCS. The subscription request response message indicates whether the state information of the first media function instance is successfully subscribed.

As such, after the state information of the first media function instance is successfully subscribed, when the state of the first media function instance is updated subsequently, the MRS may send a media state subscription message to the MCS. The media state subscription message carries state update information of the first media function instance.

Similarly, in embodiments of the present disclosure, the related request and the response message among the MRS, the MCS and the MFS may be interacted via the SBI.

Referring to FIG. 11 and in combination with FIG. 5, when the method for interaction of the media function of the IMS network in embodiments of the disclosure is performed by the MFS, the method includes the following steps.

At step 111, a third network element receives a media session establishment request from a first network element. The media session establishment request is configured to negotiate a target media resource for media session establishment between the first network element and the third network element.

At step 112, a media function instance sends a media session establishment request response message to the first network element, in response to the media session establishment request. The media session establishment request response message carries related information of the target media resource.

As illustrated in FIG. 6, in the method in embodiments of the disclosure, the MFS may receive a media session update request from the MCS. The media session update request carries update indication information of the target media resource. Then, a media control service updates the target media resource according to the update indication information, and sends a media session update request response message to the MCS after completing update.

As illustrated in FIG. 7, in the method in embodiments of the disclosure, the MFS may also receive a media session removal request from the MCS. The media session removal request includes a session removal indication and media resource information requested for removal. Then, the MFS removes a corresponding media session according to the media session removal request, releases a corresponding media resource, and sends a media session removal request response message to the MCS.

As illustrated in FIG. 10, in the method in embodiments of the disclosure, the MFS may send media capability registration request information to the MRS. The media capability registration request information is configured to register a media capability of a media function instance of the MFS. Then, the MFS receives the media function registration request response message from the MRS.

Methods in embodiments of the disclosure are introduced above. The device that implements the above methods is further provided below.

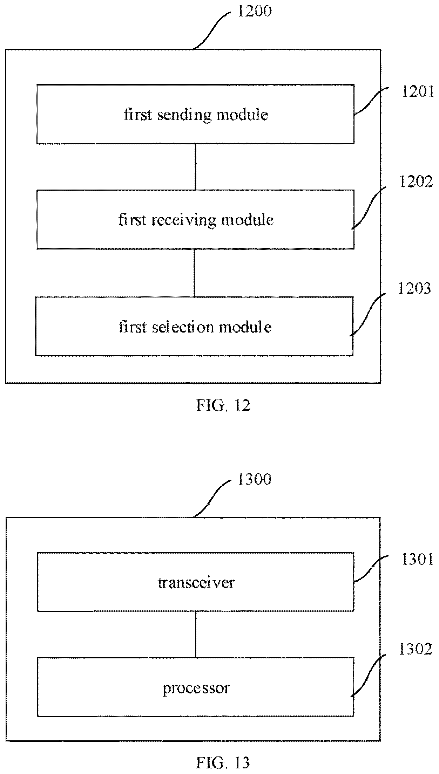

Referring to FIG. 12, a first network element 1200 is further provided in embodiments of the disclosure. The first network element 1200 includes a first sending module 1201, a first receiving module 1202 and a first selection module 1203.

The first sending module 1201 is configured to send a media function discovery request message to a second network element. The media function discovery request message is configured to query a target media function.

The first receiving module 1202 is configured to receive a media function discovery request response message from the second network element. The media function discovery request response message is configured to feed back information of at least one candidate media function instance matching the target media function.

The first selection module 1203 is configured to select a target media function instance from the at least one candidate media function instance, to provide the target media function.

In an embodiment, the first selection module is further configured to select the target media function instance from the at least one candidate media function instance, according to information carried in the media function discovery request response message and a preconfigured media function selection mechanism.

Specifically, the first selection module is further configured to select the target media function instance from the at least one candidate media function instance by at least one of:
when the at least one candidate media function instance includes only one media function instance, selecting the one candidate media function instance as the target media function instance; or
when the at least one candidate media function instance includes at least two media function instances, selecting one target media function instance according to the preconfigured media function selection mechanism.

In an embodiment, the first selection module is further configured to select the target media function instance according to the preconfigured media function selection mechanism by:
when the preconfigured media function selection mechanism is a random mechanism, selecting one target media function instance from the at least two media function instances based on a random algorithm;
when the preconfigured media function selection mechanism is a priority mechanism, selecting one target media function instance from the at least two media function instances in a matching priority order; and
when the preconfigured media function selection mechanism is a localized mechanism, selecting one target media function instance from the at least two media function instances according to a selection mechanism of the first network element.

In an embodiment, the first sending module is further configured to send the media function discovery request message to the second network element, in response to receiving a request related to a media session from a requester.

In an embodiment, the first network element further includes a subscription processing module.

The subscription processing module is configured to send a subscription request message to the second network element, in which the subscription request message is configured to subscribe state information of a first media function instance, and carries a receiving address of the state information of the first media function instance; and receive a subscription request response message from the second network element, in which the subscription request response message indicates whether the state information of the first media function instance is successfully subscribed.

In an embodiment, the first network element further includes a second receiving module.

The second receiving module is configured to receive a media state update message from the second network element. The media state update message carries state update information of the first media function instance.

In an embodiment, the first network element further includes a second sending module, a third receiving module and a third sending module.

The second sending module is configured to send a media session establishment request to a target third network element. The media session establishment request is configured to negotiate a target media resource for media session establishment between the first network element and a third network element. The target third network element is a third network element where the target media function instance is located.

The third receiving module is configured to receive a media session establishment request response message returned from the target third network element. The media session establishment request response message carries related information of the target media resource.

The third sending module is configured to send the related information of the target media resource to a requester triggering the media function discovery request message.

In an embodiment, the first network element further includes a fourth sending module and a fourth receiving module.

The fourth sending module is configured to send a media session update request to the target third network element. The media session update request carries update indication information of the target media resource.

The fourth receiving module is configured to receive a media session update request response message returned from the target third network element.

In an embodiment, the first network element further includes a fifth sending module and a fifth receiving module.

The fifth sending module is configured to send a media session removal request to the target third network element. The media session removal request includes a session removal indication and media resource information requested for removal.

The fifth receiving module is configured to receive a media session removal request response message returned from the target third network element.

In an embodiment, the first network element communicates with the second network element and a media function instance using a SBI. For example, each of the receiving module and the sending module communicate with the second network element and the media function instance using the SBI.

It needs to be noted that, the first network element in this embodiment is the first network element corresponding to the method as illustrated in FIGS. 3 to 8, and implementations of the above embodiments are applicable to embodiments for the first network element, which may achieve the same technical effect. The first network element in embodiments of the disclosure may perform all method steps implemented by the method embodiments, and may achieve the same technical effect. The same part as the method embodiments and the beneficial effect will not be repeated in the disclosure.

Referring to FIG. 13, a first network element 1300 is further provided in embodiments of the disclosure, and includes a transceiver 1301 and a processor 1302.

The transceiver 1301 is configured to send a media function discovery request message to a second network element, in which the media function discovery request message is configured to query a target media function, and receive a media function discovery request response message from the second network element, in which the media function discovery request response message is configured to feed back information of at least one candidate media function instance matching the target media function.

The processor 1302 is configured to select a target media function instance from the at least one candidate media function instance, to provide the target media function.

In an embodiment, the transceiver is further configured to select the target media function instance from the at least one candidate media function instance, according to information carried in the media function discovery request response message and a preconfigured media function selection mechanism.

In an embodiment, the transceiver is further configured to select the target media function instance from the at least one candidate media function instance by at least one of:
when the at least one candidate media function instance includes only one media function instance, selecting the one candidate media function instance as the target media function instance; or
when the at least one candidate media function instance includes at least two media function instances, selecting one target media function instance according to the preconfigured media function selection mechanism.

In an embodiment, the transceiver is further configured to select the one target media function instance according to the preconfigured media function selection mechanism by:
when the preconfigured media function selection mechanism is a random mechanism, selecting one target media function instance from the at least two media function instances based on a random algorithm;
when the preconfigured media function selection mechanism is a priority mechanism, selecting one target media function instance from the at least two media function instances in a matching priority order; and
when the preconfigured media function selection mechanism is a localized mechanism, selecting one target media function instance from the at least two media function instances according to a selection mechanism of the first network element.

In an embodiment, the transceiver is further configured to send the media function discovery request message to the second network element, in response to receiving a request related to a media session from a requester.

In an embodiment, the transceiver is further configured to send a subscription request message to the second network element, in which the subscription request message is configured to subscribe state information of a first media function instance, and carries a receiving address of the state information of the first media function instance; and receive a subscription request response message from the second network element, in which the subscription request response message indicates whether the state information of the first media function instance is successfully subscribed.

In an embodiment, the transceiver is further configured to receive a media state update message from the second network element. The media state update message carries state update information of the first media function instance.

In an embodiment, the transceiver is further configured to send a media session establishment request to a target third network element, in which the media session establishment request is configured to negotiate a target media resource for media session establishment between the first network element and a third network element, and the target third network element is a third network element where the target media function instance is located; receive a media session establishment request response message returned from the target third network element, in which the media session establishment request response message carries related information of the target media resource; and send the related information of the target media resource to a requester triggering the media function discovery request message.

In an embodiment, the transceiver is further configured to send a media session update request to the target third network element, in which the media session update request carries update indication information of the target media resource; and receive a media session update request response message returned from the target third network element.

In an embodiment, the transceiver is further configured to send a media session removal request to the target third network element, in which the media session removal request includes a session removal indication and media resource information requested for removal; and receive a media session removal request response message returned from the target third network element.

In an embodiment, the first network element communicates with the second network element and a media function instance using a SBI. That is, the transceiver communicates with the second network element and the media function instance using the SBI.

It needs to be noted that, the first network element in the embodiment is the first network element corresponding to the method as illustrated in FIGS. 3 to 8, implementations of the above embodiments are applicable to embodiments for the first network element, which may achieve the same technical effect. The first network element in embodiments of the disclosure may perform all method steps implemented by the method embodiments, and may achieve the same technical effect. The same part as the method embodiments and the beneficial effect will not be repeated in the disclosure.

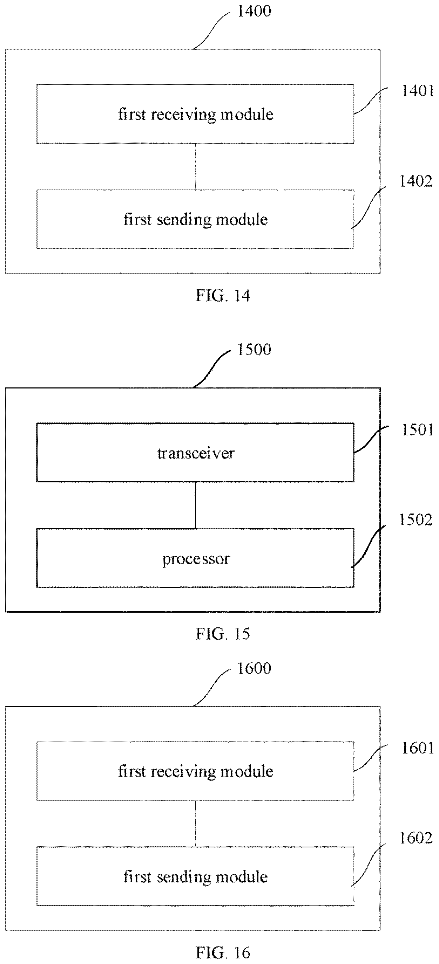

Referring to FIG. 14, a second network element 1400 is further provided in embodiments of the disclosure. The second network element 1400 includes a first receiving module 1401 and a first sending module 1402.

The first receiving module 1401 is configured to receive a media function discovery request message from the first network element. The media function discovery request message is configured to query a target media function.

The first sending module 1402 is configured to determine at least one candidate media function instance matching the target media function, and send a media function discovery request response message to the first network element. The media function discovery request response message is configured to feed back information of the at least one candidate media function instance.

In an embodiment, the second network element 1400 further includes a second receiving module and a second sending module.

The second receiving module is configured to receive media capability registration request information from a third network element. The media capability registration request information is configured to register a media capability of a media function instance of the third network element.

The second sending module is configured to store a corresponding relationship between the media function instance and the media capability according to the media function registration request information, and send media function registration request response information to the third network element.

In an embodiment, the second network element further includes a third receiving module and a third sending module.

The third receiving module is configured to receive a subscription request message from the first network element. The subscription request message is configured to subscribe state information of a first media function instance, and carries a receiving address of the state information of the first media function instance.

The third sending module is configured to send a subscription request response message to the first network element. The subscription request response message indicates whether the state information of the first media function instance is successfully subscribed.

In an embodiment, the second network element further includes a fourth sending module.

The fourth sending module is configured to, in response to a state of the first media function instance being updated, send, by the second network element, a media state subscription message to the first network element. The media state subscription message carries state update information of the first media function instance.

In an embodiment, the second network element communicates with the first network element and a media function instance using a SBI. That is, each of the receiving module and the sending module communicate with the first network element and the media function instance using the SBI.

It needs to be noted that, the second network element in the embodiment is the second network element corresponding to the method as illustrated in FIG. 9, implementations of the above embodiments are applicable to embodiments of the device, which may achieve the same technical effect. The second network element in embodiments of the disclosure may perform all method steps implemented by the method embodiments, and may achieve the same technical effect. The same part as the method embodiments and the beneficial effect will not be repeated in the disclosure.

Referring to FIG. 15, a second network element 1500 is further provided in embodiments of the disclosure. The second network element 1500 includes a transceiver 1501 and a processor 1502.

The transceiver 1501 is configured to receive a media function discovery request message from a first network element. The media function discovery request message is configured to query a target media function.

The processor 1502 is configured to determine at least one candidate media function instance matching the target media function.

The transceiver 1501 is further configured to send a media function discovery request response message to the first network element. The media function discovery request response message is configured to feed back information of the at least one candidate media function instance matching the target media function.

In an embodiment, the transceiver is further configured to receive media capability registration request information from a third network element. The media capability registration request information is configured to register a media capability of a media function instance of the third network element.

The processor is further configured to store a corresponding relationship between the media function instance and the media capability according to the media function registration request information.

The transceiver is further configured to send media function registration request response information to the third network element.

In an embodiment, the transceiver is further configured to receive a subscription request message from the first network element, in which the subscription request message is configured to subscribe state information of a first media function instance, and carries a receiving address of the state information first media function instance; and send a subscription request response message to the first network element, in which the subscription request response message indicates whether the state information of the first media function instance is successfully subscribed.

In an embodiment, the transceiver is further configured to, in response to a state of the first media function instance being updated, send a media state subscription message to the first network element. The media state subscription message carries state update information of the first media function instance.

In an embodiment, the second network element communicates with the first network element and a media function instance using a SBI. That is, the transceiver communicates with the first network element and the media function instance using the SBI.

It needs to be noted that, the second network element in the embodiment is the second network element corresponding to the method as illustrated in FIG. 9, implementations of the above embodiments are applicable to embodiments of the device, which may achieve the same technical effect. The second network element in embodiments of the disclosure may perform all method steps implemented by the method embodiments, and may achieve the same technical effect. The same part as the method embodiments and the beneficial effect will not be repeated in the disclosure.

Referring to FIG. 16, a third network element 1600 is further provided in embodiments of the disclosure. The third network element 1600 includes a first receiving module 1601 and a first sending module 1602.

The first receiving module 1601 is configured to receive a media session establishment request from a first network element. The media session establishment request is configured to negotiate a target media resource for media session establishment between the first network element and the third network element.

The first sending module 1602 is configured to send a media session establishment request response message to the first network element, in response to the media session establishment request. The media session establishment request response message carries related information of the target media resource.

In an embodiment, the third network element further includes a second receiving module and a second sending module.

The second receiving module is configured to receive a media session update request from the first network element. The media session update request carries update indication information of the target media resource.

The second sending module is configured to update the target media resource according to the update indication information, and send a media session update request response message to the first network element after completing update.

In an embodiment, the third network element further includes a third receiving module and a third sending module.

The third receiving module is configured to receive a media session removal request from the first network element. The media session removal request includes a session removal indication and media resource information requested for removal.

The third sending module is configured to remove a corresponding media session according to the media session removal request, release a corresponding media resource, and send a media session removal request response message to the first network element.

In an embodiment, the third network element further includes a fourth sending module and a fourth receiving module.

The fourth sending module is configured to send media capability registration request information to a second network element. The media capability registration request information is configured to register a media capability of a media function instance of the third network element.

The fourth receiving module is configured to receive media function registration request response information from the second network element.

In an embodiment, a plurality of media function instances are centralized in the third network element. The plurality of media function instances include at least one of:
a data channel media function instance;
a TrGW function instance;
an IM-MGW function instance;
an IMS-AGW function instance; or
a media resource processing function instance.

In an embodiment, the third network element communicates with the first network element and the second network element using a SBI. That is, each of the receiving module and the sending module communicate with the first network element and the second network element using the SBI.

It needs to be noted that, the third network element in the embodiment is the third network element corresponding to the method as illustrated in FIG. 11, implementations of the above embodiments are applicable to embodiments of the device, which may achieve the same technical effect. The third network element in embodiments of the present disclosure may perform all method steps achieved by the method embodiments, and may achieve the same technical effect. The same part as the method embodiments and the beneficial effect are not repeated in embodiments of the present disclosure.

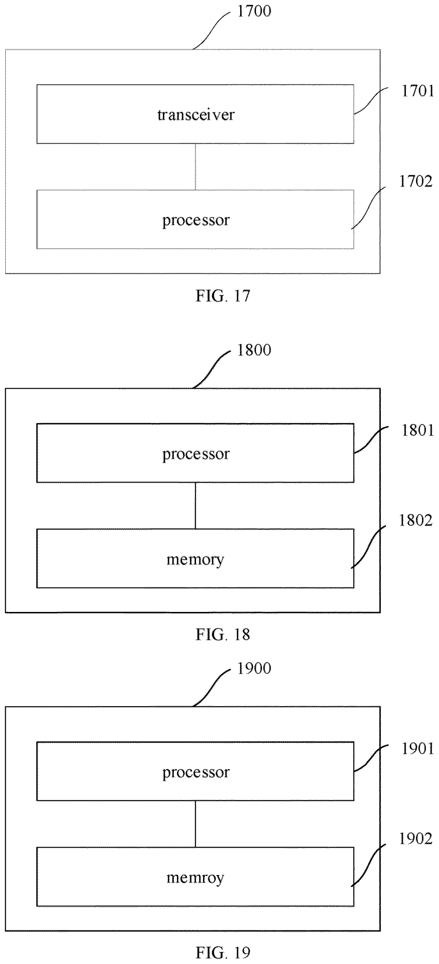

Referring to FIG. 17, a third network element 1700 is further provided in embodiments of the disclosure. The third network element 1700 includes a transceiver 1701 and a processor 1702.

The transceiver 1701 is configured to receive a media session establishment request from a first network element, in which the media session establishment request is configured to negotiate a target media resource for media session establishment between the first network element and the third network element; and send a media session establishment request response message to the first network element, in response to the media session establishment request, in which the media session establishment request response message carries related information of the target media resource.

In an embodiment, the transceiver is further configured to receive a media session update request from the first network element, in which the media session update request carries update indication information of the target media resource; and update the target media resource according to the update indication information, and send a media session update request response message to the first network element after completing update.

In an embodiment, the transceiver is further configured to receive a media session removal request from the first network element, in which the media session removal request includes a session removal indication and media resource information requested for removal; and remove a corresponding media session according to the media session removal request, release a corresponding media resource, and send a media session removal request response message to the first network element.

In an embodiment, the transceiver is further configured to media capability registration request information to a second network element, in which the media capability registration request information is configured to register a media capability of a media function instance of the third network element; and receive media function registration request response information from the second network element.

In an embodiment, a plurality of media function instances are centralized in the third network element. The plurality of media function instances include at least one of:
a data channel media function instance;
a TrGW function instance;
an IM-MGW function instance; or
an IMS-AGW function instance; or
a media resource processing function instance.

In an embodiment, the third network element communicates with the first network element and the second network element using a SBI. That is, the transceiver communicates with the first network element and the second network element using the SBI.

It needs to be noted that, the third network element in the embodiment is the third network element corresponding to the method as illustrated in FIG. 11, implementations of the above embodiments are applicable to embodiments of the device, which may achieve the same technical effect. The third network element in embodiments of the present disclosure may perform all method steps achieved by the method embodiments, and may achieve the same technical effect. The same part as the method embodiments and the beneficial effect are not repeated in embodiments of the present disclosure.

Referring to FIG. 18, a first network element 1800 is further provided in embodiments of the disclosure. The first network element 1800 includes a processor 1801, a memory 1802, and a computer program stored on the memory 1802 and executable by the processor 1801. When the computer program is executed by the processor 1801, each process of the method embodiments for interaction of the media function executed by the first network element may be achieved with the same technical effect, which will not be repeated to avoid repetition.

Referring to FIG. 19, a second network element 1900 is further provided in embodiments of the disclosure. The second network element 1900 includes a processor 1901, a memory 1902, and a computer program stored on the memory 1902 and executable by the processor 1901. When the computer program is executed by the processor 1901, each process of the method embodiments for interaction of the media function executed by the second network element may be achieved with the same technical effect, which will not be repeated to avoid repetition.

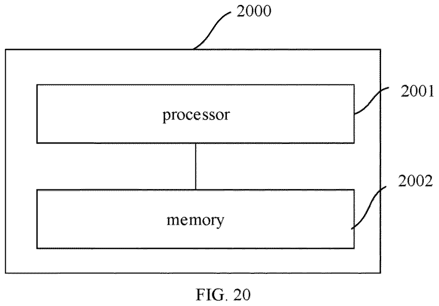

Referring to FIG. 20, a third network element 2000 is further provided in embodiments of the disclosure. The third network element 2000 includes a processor 2001, a memory 2002, and a computer program stored on the memory 2002 and executable by the processor 2001. When the computer program is executed by the processor 2001, each process of the method embodiments for interaction of the media function executed by the third network element may be achieved with the same technical effect, which will not be repeated to avoid repetition.

A computer-readable storage medium storing a computer program is further provided in embodiments of the present disclosure. When the computer program is executed by a processor, each process of the method embodiments for interaction of the media function may be implemented with the same technical effects, which will not be repeated here to avoid repetition. The computer-readable storage medium includes a read-only memory (ROM), a random access memory (RAM), a magnetic disk or an optical disk.

It needs to be noted that, the terms "comprise/comprising", "include/including" or any other variations thereof, are intended to cover a non-exclusive inclusion, such that a process, a method, an article or an apparatus including a series of elements not only includes those elements but also includes other elements not expressly listed, or may also include elements inherent to such process, method, article, or apparatus. In the absence of more constraints, the elements defined by a sentence "comprising one" do not preclude the presence of additional same elements in the process, method, article, or apparatus that includes the elements.

Based on the description of implementations, those skilled in the art may clearly understand that the methods in the embodiment will be implemented by means of software and necessary general-purpose hardware, or by means of hardware, but the former is a better implementation in most cases. On the basis of such an understanding, the technical solution of the present disclosure essentially or partly contributing to the related art may be embodied in the form of a software product. The software product is stored in a storage medium (such as a ROM/RAM, a diskette or a CD) including several instructions so that a terminal (which may be a mobile phone, a computer, a server, an air conditioner or a network device) is caused to perform the method as described in various embodiments of the disclosure.

The embodiments of the present disclosure have been described above with reference to the accompanying drawings, but the present disclosure is not limited to the above embodiments, which are merely illustrative rather than restrictive, and many forms may be made by those skilled in the art without departing from the spirit of the present disclosure and the scope of the claims, belong to the protection scope of the present disclosure.

## Claims

1. A method for interaction of a media function in an Internet protocol (IP) multimedia subsystem (IMS) network, comprising:
sending, by a first network element, a media function discovery request message to a second network element, wherein the media function discovery request message is configured to query a target media function;
receiving, by the first network element, a media function discovery request response message from the second network element, wherein the media function discovery request response message is configured to feed back information of at least one candidate media function instance matching the target media function; and
selecting, by the first network element, a target media function instance from the at least one candidate media function instance, to provide the target media function.

2. The method according to claim 1, wherein the media function discovery request message carries at least one of:
a name of the target media function;
a type of the target media function;
a type of a requester triggering a media function discovery request; or
target media capability information, wherein the target media capability information comprises at least one of a codec capability, a playback capability, a conference capability, a data channel media capability or a topology hiding capability.

3. The method according to claim 1, wherein the media function discovery request response message carries at least one of:
a type of the candidate media function instance;
an identification of the candidate media function instance;
an address of the candidate media function instance, wherein the address comprises a fully qualified domain name (FQDN) address and/or an IP address;
media service capability information that the candidate media function instance is capable of providing;
a matching priority of the candidate media function instance;
load information of the candidate media function instance; or
position information of the candidate media function instance.

4. The method according to any one of claims 1 to 3, wherein selecting by the first network element the target media function instance from the at least one candidate media function instance comprises:
selecting, by the first network element, the target media function instance from the at least one candidate media function instance, according to information carried in the media function discovery request response message and a preconfigured media function selection mechanism.

5. The method according to claim 4, wherein selecting the target media function instance from the at least one candidate media function instance comprises at least one of:
when the at least one candidate media function instance comprises only one media function instance, selecting the one candidate media function instance as the target media function instance; or
when the at least one candidate media function instance comprises at least two media function instances, selecting one target media function instance according to the preconfigured media function selection mechanism.

6. The method according to claim 5, wherein selecting the one target media function instance according to the preconfigured media function selection mechanism comprises:
when the preconfigured media function selection mechanism is a random mechanism, selecting one target media function instance from the at least two media function instances based on a random algorithm;
when the preconfigured media function selection mechanism is a priority mechanism, selecting one target media function instance from the at least two media function instances in a matching priority order; and
when the preconfigured media function selection mechanism is a localized mechanism, selecting one target media function instance from the at least two media function instances according to a selection mechanism of the first network element.

7. The method according to claim 6, wherein the selection mechanism of the first network element comprises at least one of:
selecting according to position information of a user equipment (UE) and position information of the at least two media function instances;
selecting according to a codec capability of a user equipment (UE) and codec capabilities of the at least two media function instances; or
selecting according to load information of the at least two media function instances.

8. The method according to claim 1, wherein the first network element sends the media function discovery request message to the second network element, in response to receiving a request related to a media session from a requester.

9. The method according to claim 8, wherein the request related to the media session comprises at least one of:
a call request that requires to establish an IMS session;
a playback request;
a conference request;
a codec negotiation request;
establishing different network sessions of a session initialization protocol (SIP); or
a data channel session request.

10. The method according to claim 1, further comprising:
sending, by the first network element, a subscription request message to the second network element, wherein the subscription request message is configured to subscribe state information of a first media function instance, and carries a receiving address of the state information of the first media function instance; and
receiving, by the first network element, a subscription request response message from the second network element, wherein the subscription request response message indicates whether the state information of the first media function instance is successfully subscribed.

11. The method according to claim 10, wherein the subscription request message further carries indication information of a media capability desired for subscription.

12. The method according to claim 10, further comprising:
receiving, by the first network element, a media state update message from the second network element, wherein the media state update message carries state update information of the first media function instance.

13. The method according to claim 4, further comprising:
sending, by the first network element, a media session establishment request to a target third network element, wherein the media session establishment request is configured to negotiate a target media resource for media session establishment between the first network element and a third network element, and the target third network element is a third network element where the target media function instance is located;
receiving, by the first network element, a media session establishment request response message returned from the target third network element, wherein the media session establishment request response message carries related information of the target media resource; and
sending, by the first network element, the related information of the target media resource to a requester triggering the media function discovery request message.

14. The method according to claim 13, further comprising:
sending, by the first network element, a media session update request to the target third network element, wherein the media session update request carries update indication information of the target media resource; and
receiving, by the first network element, a media session update request response message returned from the target third network element.

15. The method according to claim 13, further comprising:
sending, by the first network element, a media session removal request to the target third network element, wherein the media session removal request comprises a session removal indication and media resource information requested for removal; and
receiving, by the first network element, a media session removal request response message returned from the target third network element.

16. The method according to claim 1, wherein
the first network element communicates with the second network element and a media function instance using a service based interface (SBI).

17. A method for interaction of a media function in an Internet protocol (IP) multimedia subsystem (IMS) network, comprising:
receiving, by a second network element, a media function discovery request message from a first network element, wherein the media function discovery request message is configured to query a target media function;
determining, by the second network element, at least one candidate media function instance matching the target media function, and sending a media function discovery request response message to the first network element, wherein the media function discovery request response message is configured to feed back information of the at least one candidate media function instance.

18. The method according to claim 17, wherein the media function discovery request message carries at least one of:
a name of the target media function;
a type of the target media function;
a type of a requester triggering a media function discovery request; or
target media capability information, wherein the target media capability information comprises at least one of a codec capability, a playback capability, a conference capability, a data channel media capability or a topology hiding capability.

19. The method according to claim 17, wherein the media function discovery request response message carries at least one of:
a type of the candidate media function instance;
an identification of the candidate media function instance;
an address of the candidate media function instance, wherein the address comprises a fully qualified domain name (FQDN) address and/or an IP address;
media service capability information that the candidate media function instance is capable of providing;
a matching priority of the candidate media function instance;
load information of the candidate media function instance; or
position information of the candidate media function instance.

20. The method according to claim 17, further comprising:
receiving, by the second network element, media capability registration request information from a third network element, wherein the media capability registration request information is configured to register a media capability of a media function instance of the third network element; and
storing, by the second network element, a corresponding relationship between the media function instance and the media capability according to the media function registration request information, and sending media function registration request response information to the third network element.

21. The method according to claim 20, wherein the media capability registration request information carries at least one of: a type of a media function, an identification of the media function instance, an address of the media function instance, or media service capability information that the media function instance is capable of providing.

22. The method according to claim 17, further comprising:
receiving, by the second network element, a subscription request message from the first network element, wherein the subscription request message is configured to subscribe state information of a first media function instance, and carries a receiving address of the state information of the first media function instance; and
sending, by the second network element, a subscription request response message to the first network element, wherein the subscription request response message indicates whether the state information of the first media function instance is successfully subscribed.

23. The method according to claim 22, further comprising:
in response to a state of the first media function instance being updated, sending, by the second network element, a media state subscription message to the first network element, wherein the media state subscription message carries state update information of the first media function instance.

24. The method according to claim 17, wherein
the second network element communicates with the first network element and a media function instance using a service based interface (SBI).

25. A method for interaction of a media function in an Internet protocol (IP) multimedia subsystem (IMS) network, comprising:
receiving, by a third network element, a media session establishment request from a first network element, wherein the media session establishment request is configured to negotiate a target media resource for media session establishment between the first network element and the third network element; and
sending, by a media function instance, a media session establishment request response message to the first network element, in response to the media session establishment request, wherein the media session establishment request response message carries related information of the target media resource.

26. The method according to claim 25, further comprising:
receiving, by the third network element, a media session update request from the first network element, wherein the media session update request carries update indication information of the target media resource; and
updating, by a media control service, the target media resource according to the update indication information, and sending a media session update request response message to the first network element after completing update.

27. The method according to claim 25, further comprising:
receiving, by the third network element, a media session removal request from the first network element, wherein the media session removal request comprises a session removal indication and media resource information requested for removal; and
removing, by a media control service, a corresponding media session according to the media session removal request, releasing a corresponding media resource, and sending a media session removal request response message to the first network element.

28. The method according to claim 25, further comprising:
sending, by the third network element, media capability registration request information to a second network element, wherein the media capability registration request information is configured to register a media capability of a media function instance of the third network element; and
receiving, by the third network element, media function registration request response information from the second network element.

29. The method according to claim 25, wherein
a plurality of media function instances are centralized in the third network element, and the plurality of media function instances comprise at least one of:
a data channel media function instance;
a transition gateway (TrGW) function instance;
an IP multimedia media gateway (IM-MGW) function instance;
an IMS access gateway (IMS-AGW) function instance; or
a media resource processing function instance.

30. The method according to claim 25, wherein
the third network element communicates with the first network element and a second network element using a service based interface (SBI).

31. A first network element, comprising a processor and a transceiver, wherein
the transceiver is configured to send a media function discovery request message to a second network element, wherein the media function discovery request message is configured to query a target media function, and receive a media function discovery request response message from the second network element, wherein the media function discovery request response message is configured to feed back information of at least one candidate media function instance matching the target media function; and
the processor is configured to select a target media function instance from the at least one candidate media function instance, to provide the target media function.

32. A first network element, comprising a processor, a memory and a program stored on the memory and executable by the processor, wherein when the program is executed by the processor, steps of the method according to any one of claims 1 to 16 are implemented.

33. A second network element, comprising a processor and a transceiver, wherein
the transceiver is configured to receive a media function discovery request message, wherein the media function discovery request message is configured to query a target media function from a first network element; and
the processor is configured to determine at least one candidate media function instance matching the target media function, and send a media function discovery request response message to the first network element, wherein the media function discovery request response message is configured to feed back information of the at least one candidate media function instance.

34. A second network element, comprising a processor, a memory and a program stored on the memory and executable by the processor, wherein when the program is executed by the processor, steps of the method according to any one of claims 17 to 24 are implemented.

35. A third network element, comprising a processor and a transceiver, wherein
the transceiver is configured to receive a media session establishment request from a first network element, wherein the media session establishment request is configured to negotiate a target media resource for media session establishment between the first network element and the third network element; and
the processor is configured to send a media session establishment request response message to the first network element, in response to the media session establishment request, wherein the media session establishment request response message carries related information of the target media resource.

36. A third network element, comprising a processor, a memory and a program stored on the memory and executable by the processor, wherein when the program is executed by the processor, steps of the method according to any one of claims 25 to 30 are implemented.

37. A computer-readable storage medium storing a computer program, wherein when the computer program is executed by a processor, steps of the method according to any one of claims 1 to 30 are implemented.
